# EUROPEAN PATENT APPLICATION

(11) **EP 2 578 604 A1**
(43) Date of publication of application: **10.04.2013**
(21) Application number: 10852239.2
(22) Date of filing: 01.10.2010
(51) Int. Cl.: C08F 4/02, C08F 4/642, C08F 10/06

(54) **PRODUCTION METHOD FOR A SPHERICAL CARRIER FOR AN OLEFIN POLYMERIZATION CATALYST, AND A SOLID CATALYST USING THE SAME AND PROPYLENE POLYMERS**

(30) Priority: 27.05.2010 KR 20100049448
(71) Applicant: Samsung Total Petrochemicals Co. Ltd., Chungcheongnam-do 356-874 (KR)
(72) Inventor: KIM, Eun Il, Daejeon 305-345 (KR); KIM, Jong Sik, Daejeon 305-728 (KR); LEE, Young Joo, Incheon 404-270 (KR); PARK, Joon Ryeo, Seoul 137-951 (KR)
(74) Representative: Ilgart, Jean-Christophe
(86) International application number: PCT/KR2010/006721
(87) International publication number: WO 2011/149153

(57) **Abstract**

The provided are a method for preparing a spherical support for a catalyst for olefin polymerization and a solid catalyst prepared using the support, and a propylene polymer obtained by using the solid catalyst. Specifically, a method for preparing a spherical support which can be used for preparation of a propylene polymerization catalyst, particularly a dialkoxy magnesium support, comprising reacting metal magnesium and an alcohol in the presence of a halogenated nitrogen compound as a reaction initiator and adjusting the initial reaction temperature to the range of 20-25°C and the aging temperature to the range of 55-65°C; a solid catalyst for olefin polymerization prepared by using the above-obtained support; and a propylene polymer having a high bulk density prepared by using the above-obtained catalyst are provided.

## Description

### Technical field of the invention

The present invention relates to a method for preparing a spherical support for a catalyst for olefin polymerization and a solid catalyst prepared therefrom, and a propylene polymer obtained by using the solid catalyst. Specifically, the present invention relates to a method for preparing a spherical support which can be used for preparation of a propylene polymerization catalyst, particularly a dialkoxy magnesium support, characterized by reacting metal magnesium and an alcohol in the presence of a halogenated nitrogen compound as a reaction initiator and adjusting the initial reaction temperature to the range of 20-25°C and the aging temperature to the range of 55-65°C; a solid catalyst for olefin polymerization prepared by using the above-obtained support; and a propylene polymer prepared by using the above-obtained catalyst.

### Background of the invention

Currently, the most widely used catalyst for olefin polymerization is a magnesium chloride-supported Zeigler-Natta catalyst. The magnesium chloride-supported Zeigler-Natta catalyst is a solid catalyst component generally comprised of magnesium, titanium, halogen and an electron-donating organic compound. When it is used in polymerization of alpha-olefins such as propylene, it can be used together with an organic aluminum compound as a cocatalyst and an organic silane as a stereoregularity control agent at an appropriate mixing ratio. Since such supported type solid catalysts for olefin polymerization are applied to various commercial processes such as slurry polymerization, bulk polymerization, gas phase polymerization and the like, they need to meet the requirements regarding particle morphology including an appropriate particle size, uniformity in particle distribution, minimized amount of fine particles, high bulk density and the like, as well as basic requirements including high catalyst activity and stereoregularity.

For achieving those required in the catalyst particle morphologies as above, there are methods of improving the particle morphologies of a support for a catalyst for olefin polymerization known in this field, including, for examples, a recrystallization and reprecipitation method, a spray-drying method, a method using a chemical reaction, etc.

Among these known methods, by using the recrystallization and reprecipitation method, it is difficult to optionally adjust the size of a support. However, by using one of the methods using a chemical reaction, specifically a method for preparing a catalyst by using a dialkoxymagnesium support that is obtained from the reaction of magnesium with an alcohol, it is possible to provide a catalyst with much higher activity and a polymer having high stereoregularity, and further the size of a support can be adjusted depending on the process properties and the product requirements, as compared to those obtained from other known methods. On this account, attentions to this method are currently raised in this field of art.

When using dialkoxy magnesium as a support, the particle shape, particle size distribution, bulk density and the like of the dialkoxy magnesium directly affect the catalyst and the particle properties of the resulted polymers. Therefore, it is demanded to develop a highly uniform and spherical dialkoxy magnesium support having sufficiently high bulk density through the reaction between magnesium and an alcohol.

Various methods for preparing dialkoxy magnesium having a uniform shape have been disclosed in literatures from prior arts. US patent Nos. 5,162,277 and 5,955,396 suggest a method for preparing a support having a size of 5-10µm, by carboxylating amorphous diethoxy magnesium with carbon dioxide to produce magnesium ethyl carbonate and recrystallizing the magnesium ethyl carbonate in a solution with various additives and a solvent.

Further, Japanese laid-open patent application No. Heisei 06-87773 discloses a method for producing spherical particles by spraydrying an alcoholic solution of diethoxy magnesium carboxylated with CO,, and decarboxylating the resulted product. However, such conventional methods requires complex processes involving many kinds of raw materials, and can provide neither agreeable particle size nor shape of the resulted support.

In Japanese laid-open patent application Nos. Heisei 03-74341, Heisei 04-368391 and Heisei 08-73388, provided are methods for preparing diethoxy magnesium in spherical or elliptical shape by reacting metal magnesium with ethanol in the presence of iodine.

However, since said method involves an extremely rapid reaction which generates great reaction heat together with lots of hydrogen during the reaction process, it is difficult to adjust the reaction rate to the desired level. Further, there is another problem that the resulted diethoxy magnesium support comprises lots of fine particles or mass particles having different shape which are resulted from agglomeration of several particles.

Therefore, if a catalyst prepared from such support is used, as it is, for olefin polymerization, it would cause problems such that the particle size of the resulted polymer become excessively large, or an operational failure would occur owing to the collapse of particle shapes by polymerization heat during the polymerization process.

There are many well-known a catalyst composition and electron donors for preparing polypropylene having a high stereoregularity. For example, US patent No. 4,952,649 describes a method for preparing high stereoregular polypropylene having an isotacticity (i.e. xylene insolubles % by weight) of 96-98%, by reacting a magnesium chloride solution in 2-ethylhexyl alcohol, titanium tetrachloride, diakylphthalate at the temperature ranged between -20°C to 130°C so as to form recystallized solid catalyst particles; mixing the formed solid catalyst particles with triethylaluminum as a cocatalyst and various species of alkoxysilanes as an external electron donor; and subjecting the resultant to bulk polymerization of propylene. US Patent No. 5,028,671 provides a method for preparing high stereoregular polypropylene having an isotacticity of 97-98%, by using a mixture of: a spherical solid catalyst component obtained by reacting a spherical magnesium chloride support, titanium tetrachloride and dialkylphthalate, wherein the support is prepared by a spray-drying method and contains ethanol; triethylaluminum as a cocatalyst; and dialkylmethoxy silane, as an external electron donor. Although such polypropylenes provided by the above-mentioned methods of prior arts may be satisfying to a certain extent, in terms of stereoregularity, these are not suitable for developing a currently emerging eco-friendly material, i.e. polypropylene having reduced catalyst residues owing to its insufficient activity of 30kg-PP/g-cat or less.

### Summary of the invention

For solving the problems of prior arts, the present invention is to provide a method for preparing a dialkoxymagnesium support for a catalyst for olefin polymerization, which has a uniform and smooth-surfaced spherical particle shape suitable for the preparation of a catalyst which can sufficiently satisfy particle characteristics required in commercial olefin polymerization processes such as slurry polymerization, bulk polymerization, gas phase polymerization, etc.

Another purpose of the present invention is to provide a solid catalyst for olefin polymerization prepared by using a spherical support prepared by the method for preparing a support according to the present invention, and a method for preparing the same.

Still other purpose of the present invention is to provide a propylene polymer prepared by using a solid catalyst for olefin polymerization according to the present invention.

### Detailed description of the invention

For achieving the purposes as described above, the method for preparing a support for a catalyst for olefin polymerization according to the present invention is characterized by comprising the steps of: reacting metal magnesium and an alcohol in the presence of a halogenated nitrogen compound as a reaction initiator at the initial reaction temperature in the range of 20-25°C; and then elevating the temperature at the rate of 0.5-2°C/min. and aging the resulted product at a temperature in range of 55-65°C.

The shape of the metal magnesium used in the preparation method of a support according to the present invention is not strictly limited. However, regarding the size, it is a powder preferably having an average particle diameter of 10-300µm and more preferably having average particle diameter of 50-200µm. When the average particle diameter of the metal magnesium is less than 10µm, the average particle diameter of the resulted support becomes too small. However, when it is more than 300µm, the average particle size of the resulted support becomes too large and then it would be difficult to obtain a uniform spherical shape in the resulted support.

As for the alcohol used in the preparation method of a support according to the present invention, at least one selected from the group consisting of aliphatic alcohols represented by general formula ROH(wherein, R is an alkyl having 1-6 carbon atoms) such as methanol, ethanol, n-propanol, isopropanol, n-butanol, isobutanol, n-pentanol, isopentanol, neopentanol, cyclopentanol, cyclohexanol or the like, and aromatic alcohols such as phenol can bepreferably used alone or in the form of a mixture; more preferably, at least one selected from the group consisting of methanol, ethanol, propanol and butanol can be used alone or in the form of a mixture; and the most preferably, ethanol is used.

The ratio of the metal magnesium to the alcohol being used in the method for preparing a support according to the present invention, is preferably 1:5-1:50 by weight, and more preferably 1:7-1:20. When the ratio is less than 1:5, viscosity of the resulted slurry becomes so rapidly increased that homogeneous mixing can not be achieved. However, when it is more than 1:50, bulk density of the resulted support becomes rapidly decreased or the particle surface becomes rough.

As for the reaction initiator used in the reaction of metal magnesium and an alcohol, a halogenated nitrogen compound such as N-chlorosuccinimide, N-chlorophthalimide and N-bromophthalimide may be used, and particularly N-bromosuccinimide(NBS) may be preferably used since it can conduct a reaction at relatively lower temperature such as 20-25°C. The reaction initiator may be used at the amount of 0.001-0.2 parts by weight based on 1 part by weight of the total amount of metal magnesium used. When the amount is less than 0.001 part by weight, the reaction rate becomes too low, in the meantime when it is more than 0.2 part by weight, the particle size of the resulted product becomes too large or microparticles can be generated at a large amount.

In the reaction of the metal magnesium and an alcohol according to the method for preparing a support of the present invention, metal magnesium can be introduced only once at the initial stage of the reaction, and the stirring speed for the reaction is preferably 50-300ppm, and more preferably 70-250rpm. When the stirring speed is too slow or fast, uniformity in the particle size will be hardly achieved, thereby being disadvantageous.

Further, the reaction between the metal magnesium and an alcohol is preferably carried out in the presence of a reaction initiator, at the initial reaction temperature ranged between 20-25°C, and then the aging process is carried out at the temperature range of 55-65°C. When said temperature range during the initial reaction and the aging process, respectively is out of the above disclosed range, a larger amount of macroparticles are generated, disadvantageously. The time for carrying out the aging process will be suitably 2-3 hours, and when the time taken for aging process is less than 2 hours, it will affects the generation of a spherical-formed support.

A solid catalyst for olefin polymerization according to the present invention can be prepared by: firstly contact-reacting the dialkoxy magnesium support in the form of an uniform spherical particle prepared according to the present invention with a titanium halide compound in the presence of an organic solvent so as to substitute the alkoxy group of the dialkoxy magnesium with a halogen; and reacting the resultant obtained from the above reaction with titanium tetrachloride and an internal electron donor at 0-130°C in the presence of an organic solvent to obtain a porous solid catalyst particles.

As for the organic solvent used in the preparation of the solid catalyst component, aliphatic or aromatic hydrocarbons having C₆-C₁₂, preferably having C₇-C₁₀ may be used, for example octane, nonane, decane, toluene, xylene or the like.

As for the titanium halide used in the preparation of the solid catalyst component, any titanium halide may be used, and for example titanium tetrachloride may be used preferably.

As for the internal electron donor used in preparation of the solid catalyst component, diesters, particularly aromatic diesters, more specifically phthalic acid diesters are preferred. For suitable phthalic acid diesters, one or two or more selected from the compounds represented by the following general formula may be used: 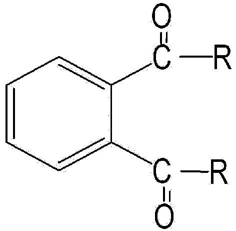 wherein, R is C₁-C₁₀ alkyl.

The suitable examples of the phthalic acid diesters include dimethylphthalate, diethylphthalate, dinormalpropylphthalate, diisopropylphthalate, dinormalbutylphthalate, diisobutylphthalate, dinormalpentylphthalate, di(2-methylbutyl)phthalate, di(3-methylbutyl)phthalate, dineopentylphthalate, dinormalhexylphthalate, di(2-methylpentyl)phthalate, di(3-methylpentyl)phthalate, diisohexylphthalate, dineohexylphthalate, di(2,3-dimethylbutyl)phthalate, dinormalheptylphthalate, di(2-methylhexyl)phthalate, di(2-ethylpentyl)phthalate, diisoheptylphthalate, dineoheptylphthalate, dinormaloctylphthalate, di(2-methylheptyl)phthalate, diisooctylphthalate, di(3-ethylhexyl)phthalate, dineohexylphthalate, dinormalheptylphthalate, diisoheptylphthalate, dineoheptylphthalate, dinormaloctylphthalate, diisooctylphthalate, dineooctylphthalate, dinormalnonylphthalate, diisononylphthalate, dinormaldecylphthalate, diisodecylphthalate and the like.

In the preparation of the solid catalyst component according to the present invention, it is preferred to carry out the contact and reaction between each component in a sufficiently dried reactor equipped with a stirrer in the inert gas atmosphere.

In the preparation of the solid catalyst component, the contact-reaction between the dialkoxy magnesium and titanium halide compound, for example titanium tetrachloride, is carried out as being suspended in an aliphatic or aromatic solvent at 0-50°C, preferably 10-30°C. When the temperature for the contact reaction is out of said range, the shape of a carrier particle is destructed, causing a problem of generating lots of microparticles. The amount of titanium halide compound used in said contact-reaction is preferably 0.1-10 moles and more preferably 0.3-2 moles per 1 mole of dialkoxy magnesium. The titanium halide compound is preferably, slowly added to the contact-reaction over 30 minutes to 3 hours. On completion of the addition, the temperature is gradually raised to 40-80°C so as to complete the reaction.

The mixture obtained from the completion of the reaction which is in the form of slurry is washed once or more with toluene and added with titanium tetrachloride. The temperature of the resulted mixture is raised to 90-130°C for aging. The amount of titanium tetrachloride used in the above, is preferably 0.5-10 moles per 1 mole of the dialkoxy magnesium and more preferably 1-5 moles.

Moreover, the speed of elevating the temperature is not specifically important, and an internal electron donor should be added in the course of the temperature elevation. The temperature and the number of times for the addition of the internal electron donor are not specifically limited. However, the total amount of the internal electron donor is preferably 0.1-1.0 parts by weight per 1 part by weight of the dialkoxy magnesium used. When the amount of the internal electron donor is out of said range, the polymerization activity of the resulted catalyst or the stereoregularity of the polymer may be possibly lowered.

The mixed slurry obtained after the completion of the reaction, is contacted with titanium tetrachloride, washed with an organic solvent and dried, resulting in the solid catalyst component for olefin polymerization. The conditions for the third contact-reaction are the same as the conditions for the second contact-reaction.

The olefin polymerization catalyst prepared by the above method comprises magnesium, titanium, an electron donor and a halogen atom. Although the amount of each component is not specifically defined, it is preferred that 20-30wt% of magnesium, 1-10wt% of titanium, 5-20wt% of an electron donor, 40-70wt% of a halogen atom are contained.

The resulted solid catalyst component(hereinafter, referred as component A) is mixed with an alkylaluminum(hereinafter, referred as component B) and an external electron donor(hereinafter, referred as component C) and used in bulk polymerization, slurry polymerization or gas phase polymerization of olefins, in particular propylens.

The component B is represented by a general formula of AlR¹₃(wherein, R¹ is C₁-C₄ alkyl), and for example trimethylaluminum, triethylaluminum, tripropylaluminum, tributylaluminum, triisobutylaluminum may be mentioned.

The component C is represented by a general formula of R²ₘSi(OR³)₄₋ₘ(wherein, R² is a C₁-C₁₀ alkyl or cycloalkyl, or aryl; R³ is a C₁-C₃ alkyl; m is 1 or 2; when m is 2, two of ^{R}2 may be same or different. As specific examples of the component C, n-C₃H₇Si(OCH₃)₃, (n-C₃H₇)₂Si(OCH₃)₂, i-C₃H₇Si(OCH₃)₃, (i-C₃H₇)₂Si(OCH₃)₂, n-C₄H₉Si(OCH₃)₃, (n-C₄H₉)₂Si(OCH₃)₂, i-C₄H₉Si(OCH₃)₃, (i-C₄H₉)₂Si(OCH₃)₂, t-C₄H₉Si(OCH₃)₃, (t-C₄H₉)₂Si(OCH₃)₂, n-C₅H₁₁Si(OCH₃)₃, (n-C₅H₁₁)₂S₁(OCH₃)₂, (cyclopentyl)Si(OCH₃)₃, (cyclopentyl)₂Si(OCH₃)₂, (cyclopentyl)(CH₃)Si(OCH₃)₂, (cyclopentyl)(C₂H₅)Si(OCH₃)₂, (cyclopentyl)(C₃H₇)Si(OCH₃)₂, (cyclohexyl)Si(OCH₃)₃, (cyclohexyl)₂Si(OCH₃)₂, (cyclohexyl)(CH₃)Si(OCH₃)₂, (cyclohexyl)(C₂H₅)Si(OCH₃)₂, (cyclohexyl)(C₃H₇)Si(OCH₃)₂, (cycloheptyl)Si(OCH₃)₃, (cycloheptyl)₂Si(OCH₃)₂, (cycloheptyl)(CH₃)Si(OCH₃)₂, (cycloheptyl)(C₂H₅)si(OCH₃)₂, (cycloheptyl)(C₃H₇)Si(OCH₃)₂, PhSi(OCH₃)₃, Ph₂Si(OCH₃)₂(wherein Ph is phenyl), n-C₃H₇Si(OC₂H₅)₃, (n-C₃H₇)₂Si(OC₂H₅)₂, i-C₃H₇Si(OC₂H₅)₃, (i-C₃H₇)₂Si(OC₂H₅)₂, n-C₄H₉Si(OC₂H₅)₃, (n-C₄H₉)₂Si(OC₂H₅)₂, i-C₄H₉Si(OC₂H₅)₃, (i-C₄H₉)₂Si(OC₂H₅)₂, t-C₄H₉si(OC₂H₅)₃, (t-C₄H₉)₂Si(OC₂H₅)₂, n-C₅H₁₁Si(OC₂H₅)₃, (n-C₅H₁₁)₂Si(OC₂H₅)₂, (cyclopentyl)Si(OC₂H₅)₃, (cyclopentyl)₂Si(OC₂H₅)₂, (cyclopentyl)(CH₃)Si(OC₂H₅)₂, (cyclopentyl)(C₂H₅)Si(OC₂H₅)₂, (cyclopentyl)(C₃H₇)Si(OC₂Hs)₂, (cyclohexyl)Si(OC₂H₅)₃, (cyclohexyl)₂Si(OC₂H₅)₂, (cyclohexyl)(CH₃)Si(OC₂H₅)₂, (_{C}y_{C}lohe_{X}yl)(C₂H₅)Sₗ(OC₂H₅)₂, (cyclohexyl)(C₃H₇)Si(OC₂H₅)₂, (cycloheptyl)Si(OC₂H₅)₃, (cycloheptyl)₂Si(OC₂H₅)₂, (cycloheptyl)(CH₃)Si(OC₂H₅)₂, (cycloheptyl)(C₂H₅)Si(OC₂H₅)₂, (cycloheptyl)(C₃H₇)Si(OC₂H₅)₂, (phenyl)si(OC₂H₅)₃, (phenyl)₂Si(OC₂H₅)₂ and the like may be mentioned.

In the olefin polymerization, in particular propylene polymerization, according to the present invention, the proper ratio of the component B to the component A is, although it may be slightly different depending on the polymerization method used, preferably 1-1000 and more preferably 10-300 as a molar ratio of aluminum atom in the component B to titanium atom in the component A. When the ratio of the component B to the component A becomes out of said range, it causes a problem that the polymerization activity is dramatically lowered.

In the olefin polymerization, in particular propylene polymerization, according to the present invention, the proper ratio of the component C to the component A is preferably 1-200 and more preferably 10-100 as a molar ratio of the silicon atom in the component C to the titanium atom in the component B. When the ratio of the component C to the component A is less than 1, the stereoregularity of the polyolefin polymers is significantly lowered, and when it is more than 200, the polymerization activity of the catalyst is significantly lowered.

### Embodiments of the invention

Hereinafter, the present invention is further described in detail referencing the following examples and comparative example. However, the scope of the present invention is by no means limited by these examples which have only illustrative purposes.

### Example 1

### [Preparation of a spherical support]

To a 5L-volume ceramic reactor equipped with a stirrer, an oil heater and a reflux condenser, which was sufficiently purged with a nitrogen stream, N-bromosuccinimide (NBS) 5.5g, metal magnesium (average particle size of 100µm, powdered product) 60g, anhydrous ethanol 1000ml were introduced at the reactor temperature of 25°C and while mixing at the stirring speed of 240rpm, the reactor temperature was gradually raised from 25°C to 55°C over 1 hour and maintained at 55°C. When the temperature was reached to approximately 40°C during the temperature increase, hydrogen was generated as the reaction began. For discharging the hydrogen gas, the outlet of the reactor was left open so as to maintain the reactor under the atmospheric pressure. On completion of the hydrogen generation, the reactor temperature was maintained at 55°C for 2 hours for aging.

After a lapse of 2 hours, the resulted product was washed 3 times at 50°C with 2,000ml n-hexane per wash. The washed resultant was dried for 24 hours under the flow of nitrogen, obtaining 259g (yield 92.3%) of a dialkoxymagnesium support in the form of a solid white powder with good flowability.

The particle size of the thus dried product was evaluated by a light penetration method using a laser particle size analyzer(Mastersizer X, manufactured by Malvern Instruments), resulting in the average particle size of 15.4µm and the macromolecule content (not less than the size of 75µm) of 25.4wt%. The particle distribution index (P) (P = (D₉₀-D₁₀)/D₅₀, wherein D₉₀ is the particle size corresponding to cumulative size distribution of 90%, D₅₀ is the particle size corresponding to cumulative size distribution of 50%, and D₁₀ is the particle size corresponding to cumulative size distribution of 10%) was 0.84, and the bulk density measured according to ASTM D1895 was 0.30g/cc.

### [Solid catalyst component preparation]

To a 1L-volume glass reactor equipped with a stirrer, of which atmosphere was sufficiently substituted with nitrogen, 150ml of toluene and 25g of the above prepared diethoxy magnesium were added and maintained at 10°C. Thereto, 25ml of titanium tetrachloride which were diluted in 50ml of toluene were added over 1 hour, and then the reactor temperature was elevated to 60°C at the rate of 0.5°C per minute. The reaction mixture was maintained at 60°C for 1 hour. Then, the mixture was maintained still by stopping stirring until a solid product was precipitated. The supernatant was removed, then 200ml of fresh toluene was added to the residues and stirred again for 15 minutes, and washed once by the same method as above.

To the solid product treated with titanium tetrachloride, 150ml of toluene were added and stirred at 250 rpm while maintaining the temperature at 30°C as well as adding 50ml of titanium tetrachloride thereto over 1 hour at a constant speed. Completing the addition of titanium tetrachloride, 2.5ml of diisobutyl phthalate were further added, and the reactor temperature was elevated to 110°C at a constant rate over 80 minutes, i.e. at the rate of 1°C per minute. During the temperature elevation, at each time the reactor temperature reached to 40°C and 60°C, 2.5ml of diisobutyl phthalate were additionally added, respectively. The temperature was maintained at 110°C for 1 hour and lowered to 90°C. Stirring was stopped and the supernatant was removed. Then, the resulted mixture was washed once by the same method above while using 200ml of toluene. Thereto 150m of toluene and 50ml of titanium tetrachloride were added, the temperature was raised to 110°C and maintained at 110°C for 1 hour. Said slurry mixture after completion of the aging process was washed twice with 200ml of toluene per each wash, and washed 5 times with 200ml of n-hexane per each wash at 40°C, thereby obtaining a pale-yellow solid catalyst. A titanium content of the resulted catalyst dried under a nitrogen stream for 18 hours was 2.12 wt%. The particle size of the solid catalyst suspended in n-hexane was measured by a light transmission method using a laser particle size analyzer(Mastersizer X manufactured by Malvern Instruments), resulting in 16.1µm of the average particle size.

The catalyst characteristics were analyzed and the results were represented in Table 1.

### [Propylent polymerization]

Into a 2L stainless reactor, a small glass tube charged with 5mg of each of the above-prepared catalyst from the Examples and Comparative example was placed, and the atmosphere of the autoclave was sufficiently substituted by nitrogen. 3mmol of triethyl aluminum were added thereto along with 0.15mmol of cyclohexyl-methyl dimethoxy silane which was used as an external electron donor. Subsequently, 1000ml of hydrogen and 1.2L of propylene were added in this order, and the temperature was elevated to 70°C. By operating a stirrer, the glass tube installed in the reactor was broken so as to start polymerization. When 1 hour elapses after the start of polymerization, a valve was opened, while lowering the temperature of the reactor to room temperature(25 °C), thereby completely eliminating the propylene from the reactor.

The resulted polymer was assayed and the results were summarized in the following Table 1.

Catalyst activity and bulk density were determined by the following method:
① Catalyst activity (kg-PP/g-cat) = amount of polymers produced(kg)÷amount of catalyst(g)
② Bulk density (BD) = value measured by ASTM D1895

### Example 2

A dialkoxymangnesium support was obtained at the amount of 268g (yield, 95.5%) by the same method for preparing a support as in the above Example 1, except that the reactor temperature was gradually raised from 25°C to 60°C over 1 hour, then maintained at 60°C, and after completion of the hydrogen generation, was maintained at 60°C for 2 hours for the aging process.

The resultant was evaluated by the same test method as in the above Example 1, resulting in the average particles of 16.3µm and the content of macromolecules having a size of not less than 75µm of 23.6wt%. The particle size distribution index was 0.77 and the bulk density was 0.31g/cc.

A solid catalyst was prepared and evaluated by the same method as in the above Example 1. The titanium content of the resulted solid catalyst was 2.26wt% and the average particle size was 16.7µm.

The catalyst characteristics and physical properties of the resulted polypropylene were analyzed and the results were represented in Table 1.

### Example 3

A dialkoxymangnesium support was obtained at the amount of 267g (yield, 95.1%) by the same method for preparing a support as in the above Example 1, except that the reactor temperature was gradually raised from 25°C to 65°C over 1 hour, then maintained at 65°C, and after completion of the hydrogen generation, was maintained at 65°C for 2 hours for the aging process.

The resultant was evaluated by the same test method as in the above Example 1, resulting in the average particles of 16.2µm and the content of macromolecules having a size of not less than 75µm of 22.7wt%. The particle size distribution index was 0.78 and the bulk density was 0.30g/cc.

A solid catalyst was prepared and evaluated by the same method as in the above Example 1. The titanium content of the resulted solid catalyst was 2.23wt% and the average particle size was 16.6µm.

The catalyst characteristics and physical properties of the resulted polypropylene were analyzed and the results were represented in Table 1.

### Comparative Example 1

### [Preparation of a spherical support]

To a 5L-volume ceramic reactor equipped with a stirrer, an oil heater and a reflux condenser, which was sufficiently purged with a nitrogen stream, N-chlorosuccinimide (NCS) 4.5g, metal magnesium (average particle size of 100µm, powdered product) 60g, anhydrous ethanol 1000ml were introduced in the reactor while mixing at the stirring speed of 240rpm, and the temperature of the reactor was maintained to 75°C for a reflux condition. After a lapse of about 5minutes, hydrogen was generated as the reaction began. For discharging the hydrogen gas, the outlet of the reactor was left open so as to maintain the reactor under the atmospheric pressure. On completion of the hydrogen generation, the reactor temperature was maintained at 75°C for 2 hours for aging. After a completion of aging process, the resulted product was washed 3 times at 50°C with 2,000ml n-hexane per wash. The washed resultant was dried for 24 hours under the flow of nitrogen, obtaining 264g (yield 94.0%) of a dialkoxymagnesium support in the form of a solid white powder with good flowability.

The resultant was evaluated by the same test method as in the above Example 1, resulting in the average particles of 17.5µm and the content of macromolecules having a size of not less than 75µm of 25.4wt%. The particle size distribution index was 0.81 and the bulk density was 0.31 g/cc.

### [Solid catalyst component preparation]

A solid catalyst was prepared and evaluated by the same method as in the above Example 1. The titanium content of the resulted solid catalyst was 2.17wt% and the average particle size was 17.8µm.

The catalyst characteristics and physical properties of the resulted polypropylene were analyzed and the results were represented in Table 1.

### Comparative example 2

A dialkoxymangnesium support was obtained at the amount of 264g (yield, 94.0 %) by the same method for preparing a support as in the above Comparative example 1, except using N-bromosuccinimide 5.5g, instead ofN-chlorosuccinimide 4.5g.

The resultant was evaluated by the same test method as in the above Example 1, resulting in the average particles of 17.1µm and the content of macromolecules having a size of not less than 75µm of 47.5wt%. The particle size distribution index was 0.81 and the bulk density was 0.31 g/cc.

A solid catalyst was prepared and evaluated by the same method as in the above Example 1. The titanium content of the resulted solid catalyst was 2.10wt% and the average particle size was 17.6µm.

The catalyst characteristics and physical properties of the resulted polypropylene were analyzed and the results were represented in Table 1.

### Comparative Example 3

### [Preparation of a spherical support]

To a 5L-volume ceramic reactor equipped with a stirrer, an oil heater and a reflux condenser, which was sufficiently purged with a nitrogen stream, N-bromosuccinimide 5.5g, metal magnesium (average particle size of 100µm, powdered product) 60g, anhydrous ethanol 1000ml were introduced in the reactor while mixing at the stirring speed of 240rpm, and the temperature of the reactor was maintained to 50°C. After a lapse of about 10minutes, hydrogen was generated as the reaction began. For discharging the hydrogen gas, the outlet of the reactor was left open so as to maintain the reactor under the atmospheric pressure. On completion of the hydrogen generation, the reactor temperature was maintained at 50°C for 2 hours for aging. After a completion of aging process, the resulted product was washed 3 times at 50°C with 2,000ml n-hexane per wash. The washed resultant was dried for 24 hours under the flow of nitrogen, obtaining 270g (yield 96.0%) of a dialkoxymagnesium support in the form of a solid white powder with good flowability.

The resultant was evaluated by the same test method as in the above Example 1, resulting in the average particles of 17.7µm and the content of macromolecules having a size of not less than 75µm of 38.1wt%. The particle size distribution index was 0.83 and the bulk density was 0.30g/cc.

### [Solid catalyst component preparation]

A solid catalyst was prepared and evaluated by the same method as in the above Example 1. The titanium content of the resulted solid catalyst was 2.10wt% and the average particle size was 18.1µm.

The catalyst characteristics and physical properties of the resulted polypropylene were analyzed and the results were represented in Table 1.

| | initiator | initial reaction temp. (°C) | ageing temp. (°C) | activity (kg-PP/g-cat) | bulk density (BD) |
|---|---|---|---|---|---|
| Example 1 | NBS | 25 | 55 | 56.4 | 0.46 |
| Example 2 | NBS | 25 | 60 | 55.8 | 0.47 |
| Example 3 | NBS | 25 | 65 | 58.6 | 0.47 |
| Comp.Example1 | NCS | 75 | 75 | 52.1 | 0.45 |
| Comp.Example2 | NBS | 75 | 75 | 53.5 | 0.45 |
| Comp.Example3 | NBS | 50 | 50 | 55.1 | 0.44 |

As seen from Table 1, the examples wherein in NBS was used as a reaction initiator in the preparation of a dialkoxymagnesium support; temperature condition was gradually raised from the initial reaction temperature of 25°C to the range of 55-65°C where the reaction product was aged showed equivalent or more of catalyst activity to those from comparative examples and a higher bulk density in the resulting polymer. When the bulk density is increased by 0.01, it is possible to improve the productivity by about 3%. Therefore, it is anticipated to prepare a propylene polymer with a high productivity in commercial application at a high yield by using the support and the catalyst according to the present invention.

### Industrial availability

The dialkoxy magnesium support prepared according to the present invention by specifying the type of reaction initiator and adjusting the reaction temperature has an adjusted amount of macromolecules and more spherical particle shape.

A solid catalyst prepared by using such dialkoxy magnesium support of the present invention has a high activity of 50kg-PP/g-cat or more, and can provide a polymer having a bulk density of 0.46g/cc or more which greatly affects high stereoregularity and specifically productivity in commercial application, thereby being preferably used in a commercial process where high productivity is demanded.

## Claims

1. A method for preparing a spherical support for a catalyst for olefin polymerization comprising the reaction of metal magnesium and an alcohol, wherein the method comprises reacting the metal magnesium with an alcohol at the initial reaction temperature of 20-25°C, and then aging the resultant from the reaction at the temperature of 55-65°C.

2. The method according to claim 1, wherein the reaction of metal magnesium and an alcohol is carried out in the presence of a halogenated nitrogen compound as a reaction initiator.

3. The method according to claim 2, wherein the halogenated nitrogen compound is N-bromosuccinimide.

4. A catalyst for olefin polymerization prepared by reacting the support prepared by the method according to claim 1 with titanium halide and a diester compound as an internal electron donor, in the presence of an organic solvent.

5. A propylene polymer prepared from propylene polymerization carried out by using the catalyst according to claim 4, alkyl aluminum as a cocatalyst and an alkoxysilane compound as an external electron donor.

6. The propylene polymer according to claim 5 which has a bulk density of 0.46g/cc or more.
